# EUROPEAN PATENT APPLICATION

(11) **EP 4 135 476 A1**
(43) Date of publication of application: **15.02.2023**
(21) Application number: 20930082.1
(22) Date of filing: 10.04.2020
(51) Int. Cl.: H04W 92/18

(54) **TERMINAL AND COMMUNICATION METHOD**

(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2020/016188
(87) International publication number: WO 2021/205664

(57) **Abstract**

A terminal includes a reception unit that receives broadcast information from another terminal; a control unit that identifies a resource that can be used for terminal-to-terminal direct communication, based on time intervals based on a specific granularity indicated via a time division duplex (TDD) configuration included in the broadcast information; and a communication unit that performs terminal-to-terminal direct communication using the resource.

## Description

### [Technical Field]

The present invention relates to a terminal and a communication method in a radio communication system.

### [Background Art]

In long term evolution (LTE) and LTE successor systems (e.g., LTE Advanced (LTE-A), New Radio (NR) (also called 5G)), Device to Device (D2D) technology in which terminals communicate directly with each other without a base station is being discussed (e.g., Non-Patent Document 1) .

D2D reduces traffic between a terminal and a base station and enables communication between terminals even when a base station is unable to perform communication in the event of a disaster, etc. Although the 3rd generation partnership project (3GPP) refers to D2D as a "sidelink," the more generic term, D2D is used herein. However, in the description of embodiments that will be described below, the sidelink is also used as needed.

D2D communication is broadly classified into D2D discovery for discovering other terminals capable of communication and D2D communication (also called D2D direct communication, terminal-to-terminal direct communication, etc.) for performing direct communication between terminals. Hereinafter, when D2D communication, D2D discovery, etc. are not specifically distinguished, they are simply called D2D. A signal sent and received by D2D is called a D2D signal. Various use cases of vehicle to everything (V2X) services with respect to NR have been discussed (e.g., Non-Patent Document 2).

### [Prior art document]

### [Non-patent document]

[Non-Patent Document 1] 3GPP TS 38.211 V16.0.0 (2019-12)
[Non-Patent Document 2] 3GPP TR 22.886 V15.1.0 (2017-03)

### [Summary of Invention]

### [Problem to be solved by the invention]

In terminal-to-terminal direct communication, a frame number for D2D (direct frame number: DFN), a system bandwidth, a time division duplex (TDD)-uplink/downlink (UL/DL) configuration, etc., are indicated by a terminal to another terminal via a physical sidelink broadcast channel (PSBCH). A terminal identifies a UL part that is indicated via the TDD-UL/DL configuration as a resource that can be used for sidelink (SL).

In this regard, in a case of maintaining the same flexibility as that of UL, the amount of information required for the TDD-UL/DL configuration is greater than the amount of information assumed for the PSBCH.

The present invention has been made in view of the above-described points and is intended to efficiently indicate available resources in terminal-to-terminal direct communication.

### [Means for Solving Problems]

According to the disclosed technique, a terminal includes a reception unit configured to receive broadcast information from another terminal; a control unit configured to identify a resource that can be used for terminal-to-terminal direct communication, based on time intervals based on a specific granularity indicated via a time division duplex (TDD) configuration included in the broadcast information; and a communication unit configured to perform terminal-to-terminal direct communication using the resource.

### [Effects of the Invention]

The disclosed technique enables efficient indication of available resources in terminal-to-terminal direct communication.

### [Brief Description of Drawings]

Fig. 1 is a diagram illustrating V2X.
Fig. 2 is a diagram illustrating an example (1) of a V2X transmission mode.
Fig. 3 is a diagram illustrating an example (2) of a V2X transmission mode.
Fig. 4 is a diagram illustrating an example (3) of a V2X transmission mode.
Fig. 5 is a diagram illustrating an example (4) of a V2X transmission mode.
Fig. 6 is a diagram illustrating an example (5) of a V2X transmission mode.
Fig. 7 is a diagram illustrating an example (1) of a V2X communication type.
Fig. 8 is a diagram illustrating an example (2) of a V2X communication type.
Fig. 9 is a diagram illustrating an example (3) of a V2X communication type.
Fig. 10 is a sequence diagram illustrating an example (1) of V2X operations.
Fig. 11 is a sequence diagram illustrating an example (2) of V2X operations.
Fig. 12 is a sequence diagram illustrating an example (3) of V2X operations.
Fig. 13 is a sequence diagram illustrating an example (4) of V2X operations.
Fig. 14 is a diagram illustrating an example of a TDD-UL/DL configuration.
Fig. 15 is a sequence diagram illustrating an example of indicating TDD-UL/DL configuration according to an embodiment of the present invention.
Fig. 16 is a flowchart illustrating an example of indicating the number of UL slots according to an embodiment of the present invention.
Fig. 17 is a diagram illustrating an example of a functional configuration of a base station 10 according to an embodiment of the present invention.
Fig. 18 is a diagram illustrating an example of a functional configuration of a terminal 20 according to an embodiment of the present invention.
Fig. 19 is a diagram illustrating an example of a hardware configuration of a base station 10 or a terminal 20 according to an embodiment of the present invention.

### [Mode for Carrying Out the Invention]

Hereinafter, one or more embodiments of the present invention will be described with reference to the drawings. The embodiments described below are examples, and embodiments to which the present invention is applied are not limited to the following embodiments.

In an operation of a radio communication system according to an embodiment of the present invention, a conventional technology is used as appropriate. The conventional technology is, for example, conventional LTE, but is not limited to the conventional LTE. The term "LTE" as used herein may have a broad meaning indicating LTE-Advanced and a system succeeding LTE-Advanced (e.g., NR), or a wireless local area network (WLAN), unless otherwise specified.

In an embodiment of the present invention, a duplex method may be a time division duplex (TDD) method, a frequency division duplex (FDD) method, or any other method (e.g., flexible duplex method, etc.).

In an embodiment of the present invention, an expression, a radio parameter or the like is "configured" may mean that a predetermined value is pre-configured or a radio parameter indicated by a base station 10 or a terminal 20 is configured.

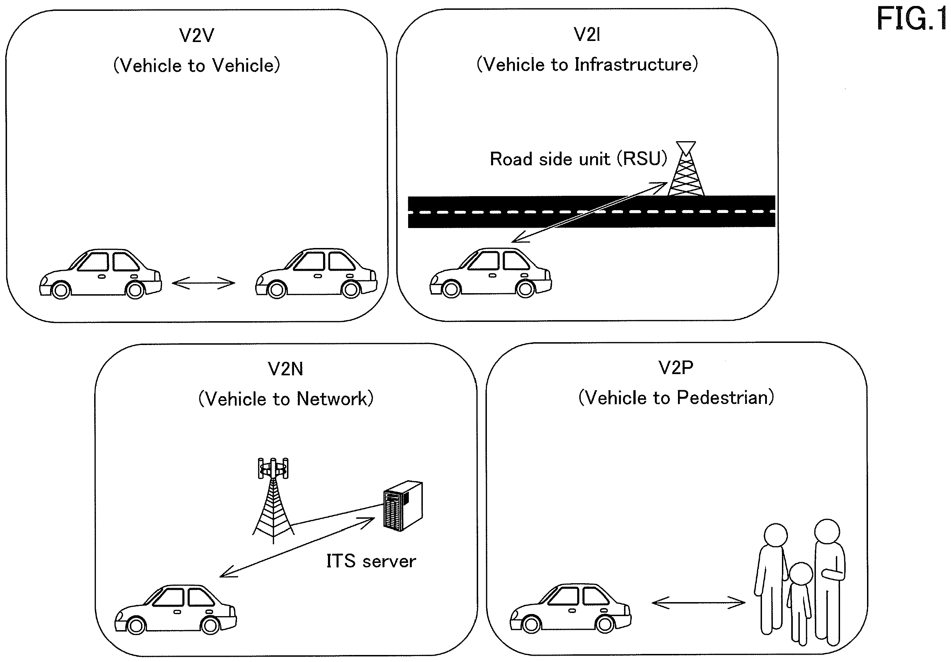

Fig. 1 is a diagram illustrating V2X. In 3GPP, Enhancement of D2D functions in order to implement vehicle to everything (V2X) or enhanced V2X (eV2X), has been discussed, and technical specifications are being developed. As depicted in Fig. 1, V2X is a part of Intelligent Transport Systems (ITS), and is a collective term for: Vehicle to Vehicle (V2V), which means a type of communication between vehicles; Vehicle to Infrastructure (V2I), which means a type of communication between a vehicle and a roadside unit (RSU); Vehicle to Network (V2N), which means a type of communication between a vehicle and an ITS server; and Vehicle to Pedestrian (V2P), which means a type of communication between a vehicle and a mobile terminal which a pedestrian carries.

In addition, in 3GPP, V2X using LTE or NR cellular communication and terminal-to-terminal communication, has been discussed. V2X using cellular communication is also called cellular V2X. In NR V2X, Discussions have been held for implementing large capacity, low latency, high reliability, and quality of service (QoS) control.

With respect to the LTE/NR V2X, it is assumed that discussions will be held not only for developing 3GPP specifications. For example, it is assumed that discussions will be held: for ensuring interoperability; for reducing cost by upper layer implementation; for a method of using or switching a plurality of radio access technologies (RAT); for regulatory compliance in each country; for methods of data acquisition, data distribution, database management and utilization, with respect to V2X platform of LTE or NR.

In an embodiment of the present invention, it is mainly assumed that a communication apparatus is mounted on a vehicle, but embodiments of the present invention are not limited to such embodiment. For example: the communication apparatus may be a terminal carried by a person; the communication apparatus may be a drone or an aircraft-mounted apparatus; or the communication apparatus may be a base station, a RSU, a relay station (relay node), a terminal having scheduling capability, or the like.

Note that Sidelink (SL) may be distinguished from Uplink (UL) or Downlink (DL), based on the following items 1)-4), or combinations thereof. SL may be referred to another name.
1) resource allocation in time domain
2) resource allocation in the frequency domain
3) a synchronization signal that is referred to (including Sidelink Synchronization Signal (SLSS) to be read)
4) a reference signal that is used for pass-loss measurement for transmission power control

With respect to SL or UL Orthogonal Frequency Division Multiplexing (OFDM), any of Cyclic-Prefix OFDM (CP-OFDM), Discrete Fourier Transform-Spread-OFDM (DFT-S-OFDM), and OFDM without Transform precoding or OFDM with Transform precoding may be applied.

In LTE SL, with respect to allocating SL resources to terminal 20, Mode 3 and Mode 4 are are defined. In Mode 3, a transmission resource is dynamically allocated by Downlink Control Information (DCI) transmitted from a base station 10 to a terminal 20. In Mode 3, Semi Persistent Scheduling (SPS) is also available. In Mode 4, a terminal 20 autonomously selects a transmission resource from a resource pool.

Note that a slot in an embodiment of the present invention may be read on (replaced with) a symbol, a mini-slot, a subframe, a radio frame, or a Transmission Time Interval (TTI). A cell in an embodiment of the present invention may be read on (replaced with) a cell group, a carrier component, a BWP, a resource pool, a resource, a Radio Access Technology (RAT), a system (including a wireless LAN), or the like.

According to an embodiment of the present invention, a terminal 20 is not limited to a V2X terminal, and may be any type of a terminal that performs D2D communication. For example, a terminal 20 may be a terminal carried by a user, such as a smartphone, or an internet of things (IoT) apparatus, such as a smart meter.

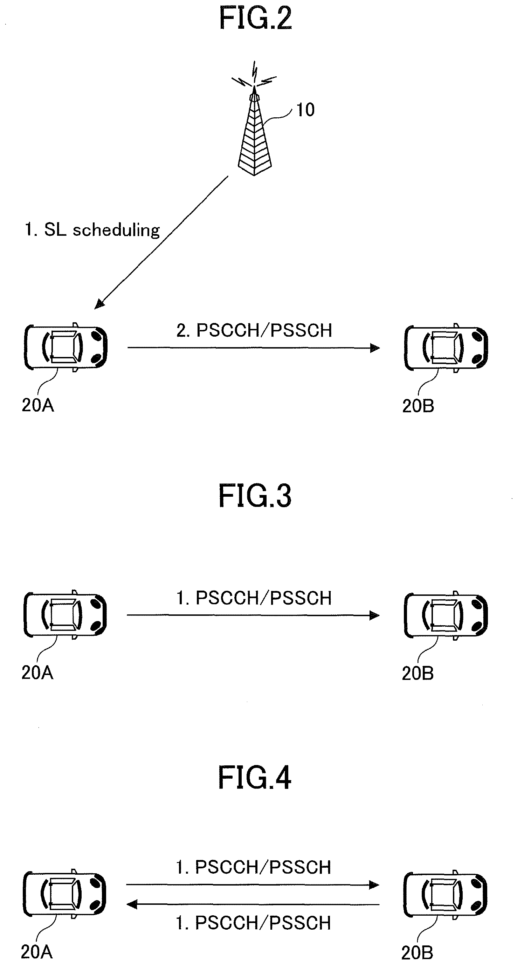

Fig. 2 is a diagram illustrating an example (1) of a V2X transmission mode. In the sidelink communication transmission mode illustrated in Fig. 2, in step 1, a base station 10 transmits sidelink scheduling to a terminal 20A. Subsequently, the terminal 20A transmits a Physical Sidelink Control Channel (PSCCH) and a Physical Sidelink Shared Channel (PSSCH) to a terminal 20B, based on the received scheduling (Step 2). The sidelink communication transmission mode illustrated in Fig. 2 may be referred to as a sidelink transmission mode 3 in LTE. In the sidelink transmission mode 3 in LTE, Uu-based sidelink scheduling is performed. Uu is a radio interface between a Universal Terrestrial Radio Access Network (UTRAN) and a User Equipment (UE). Note that a transmission mode of sidelink communication illustrated in Fig. 2 may be referred to as a sidelink transmission mode 1 in NR.

Fig. 3 is a diagram illustrating an example (2) of a V2X transmission mode. In the sidelink communication transmission mode illustrated in Fig. 3, in step 1, a terminal 20A transmits a PSCCH and a PSSCH to a terminal 20B using an autonomously selected resource. The sidelink communication transmission mode illustrated in Fig. 3 may be referred to as a sidelink transmission mode 4 in LTE. In a sidelink transmission mode 4 in LTE, a UE itself performs resource selection.

Fig. 4 is a diagram illustrating an example (3) of a V2X transmission mode. In a sidelink communication transmission mode illustrated in Fig. 4, in step 1, a terminal 20A transmits a PSCCH and a PSSCH to a terminal 20B using an autonomously selected resource. Similarly, the terminal 20B transmits a PSCCH and a PSSCCH to the terminal 20A using an autonomously selected resource (step 1). The sidelink communication transmission mode illustrated in Fig. 4 may be referred to as a sidelink transmission mode 2a in NR. In the sidelink transmission mode 2 in NR, a terminal 20 itself performs resource selection.

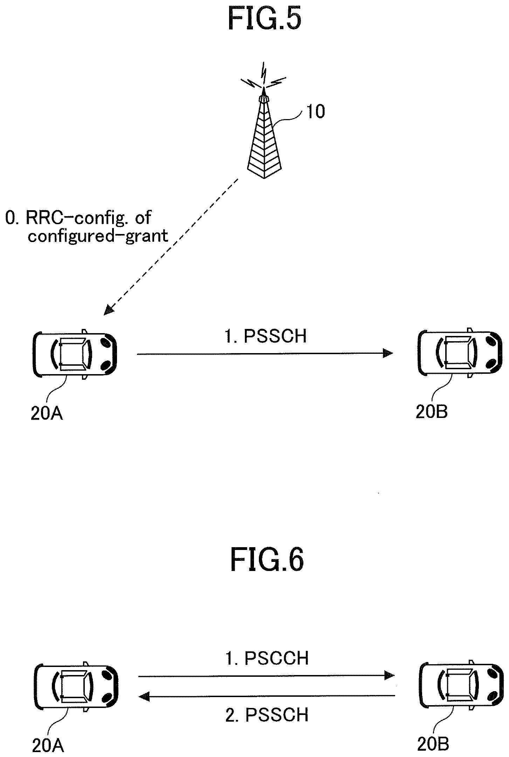

Fig. 5 is a diagram illustrating an example (4) of a V2X transmission mode. In a sidelink communication transmission mode illustrated in Fig. 5, in step 0, a base station 10 transmits a sidelink grant to a terminal 20A via Radio Resource Control (RRC) configuration. Subsequently, in step 1, the terminal 20A transmits a PSSCH to a terminal 20B, based on a received resource pattern. The sidelink communication transmission mode illustrated in Fig. 5 may be referred to as a sidelink transmission mode 2c in NR.

Fig. 6 is a diagram illustrating an example (5) of a V2X transmission mode. In a sidelink communication transmission mode illustrated in Fig. 6, in step 1, a terminal 20A transmits sidelink scheduling to a terminal 20B using a PSCCH. Subsequently, the terminal 20B transmits a PSSCH to the terminal 20A, based on the received scheduling (step 2). The sidelink communication transmission mode illustrated in Fig. 6 may be referred to as a sidelink transmission mode 2d in NR.

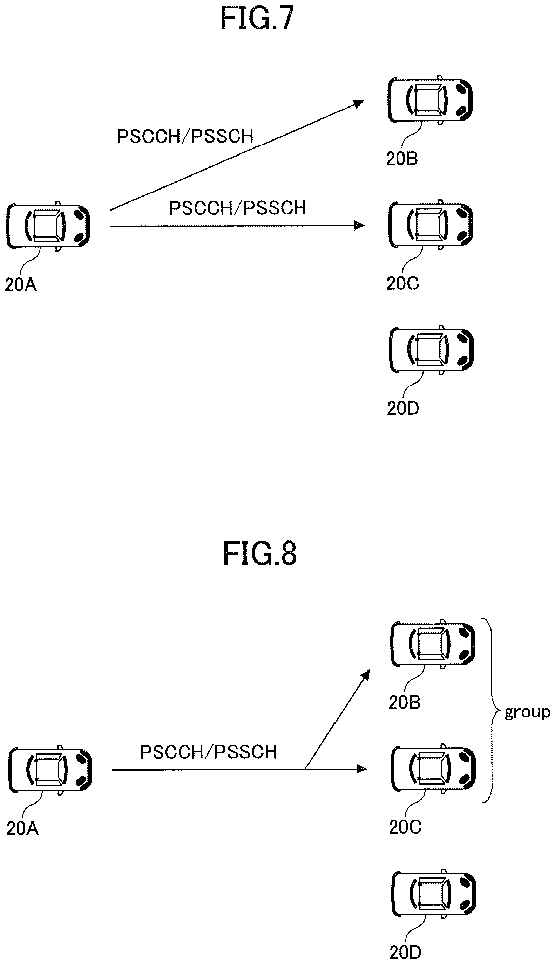

Fig. 7 is a diagram illustrating an example (1) of a V2X communication type. A sidelink communication type illustrated in Fig. 7 is a unicast type. A terminal 20A transmits a PSCCH and a PSSCH to a terminal 20. In an example illustrated in Fig. 7, the terminal 20A performs unicast for a terminal 20B and performs unicast for a terminal 20C.

Fig. 8 is a diagram illustrating an example (2) of a V2X communication type. The sidelink communication type illustrated in Fig. 8 is a group-cast type. A terminal 20A transmits a PSCCH and a PSSCH to a group to which one or more terminals 20 belong. In an example illustrated in Fig. 8, the group includes a terminal 20B and a terminal 20C, and the terminal 20A performs group-cast for the group.

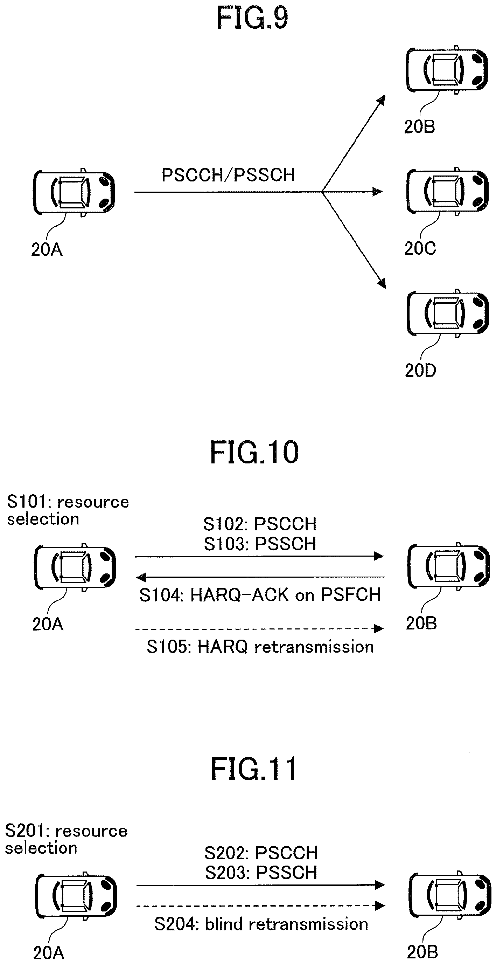

Fig. 9 is a diagram illustrating an example (3) of a V2X communication type. A sidelink communication type illustrated in Fig. 9 is a broadcast type. A terminal 20A transmits a PSCCH and a PSSCH to one or more terminals 20. In an example illustrated in Fig. 9, the terminal 20A performs broadcast for a terminal 20B, a terminal 20C, and a terminal 20D. The terminals 20A illustrated in Figs. 7-9 may be referred to as a header-UE.

It is assumed that a Hybrid Automatic Repeat Request (HARQ) is supported for unicast and groupcast of sidelink in NR-V2X. In addition, Sidelink Feedback Control Information (SFCI) including a HARQ response is defined in NR-V2X. In addition, SFCI transmission via a Physical Sidelink Feedback Channel (PSFCH) has been discussed.

In the following description, a PSFCH is used to transmit a sidelink HARQ-ACK. However, this is an example. For example, a PSCCH may be used to transmit a sidelink HARQ-ACK, a PSSCH may be used to transmit a sidelink HARQ-ACK, or another channel may be used to transmit a sidelink HARQ-ACK.

Hereinafter, for the sake of convenience, in general, information reported by a terminal 20 with a HARQ is referred to as HARQ-ACK. The HARQ-ACK may also be referred to as HARQ-ACK information. More specifically, a codebook applied to HARQ-ACK information reported from a terminal 20 to a base station 10 or the like is called a HARQ-ACK codebook. The HARQ-ACK codebook defines a bit string of HARQ-ACK information. Note that not only ACK but also NACK are transmitted by "HARQ-ACK".

Fig. 10 is a sequence diagram illustrating an example (1) of V2X operations. As illustrated in Fig. 10, a radio communication system according to an embodiment of the present invention may include a terminal 20A and a terminal 20B. Note that there are a large number of user equipments in the real world, but Fig. 10 illustrates a terminal 20A and a terminal 20B alone as an example.

Hereinafter, when terminals 20A, 20B, and the like are not particularly distinguished, they will be simply referred to as "terminals 20" or "user equipments". Fig. 10 illustrates, for example, a case where both a terminal 20A and a terminal 20B are within a cell coverage, but operations according to an embodiment of the present invention can also be applied to a case in which the terminal 20B is outside the coverage.

As described above, in the present embodiment, a terminal 20 is, for example, an apparatus mounted on a vehicle such as an automobile and has a cellular communication function and a sidelink function as a UE in LTE or NR. the terminal 20 may be a generic mobile terminal (such as a smartphone). The terminal 20 may also be an RSU. The RSU may be a UE-type RSU having a function of a UE or a gNB-type RSU having a function of a base station equipment.

A terminal 20 need not be an apparatus of a single housing. For example, various sensors may be implemented in a distributed manner in the vehicle, and the terminal 20 may an apparatus including those sensors.

The contents of sidelink transmission-data processing of a terminal 20 are basically the same as those of UL transmission-data processing in LTE or NR. For example, the terminal 20 scrambles the codewords of transmission-data, performs modulation to generate complex-valued symbols, maps the complex-valued symbols to one or two layers, and perform precoding. The precoded complex-valued symbols are then mapped to resource elements, a transmission signal (e.g., a complex-valued time-domain SC-FDMA signal) is generated, and the generated signal is transmitted from antenna ports.

A base station 10 has a function of cellular communication as a base station in LTE or NR and a function of enabling communication of a terminal 20 according to the present embodiment (e.g., resource pool configuration, resource allocation, etc.). The base station 10 may also be an RSU (gNB-type RSU).

In a radio communication system according to an embodiment of the present invention, a signal waveform used by a terminal 20 for SL or UL may be OFDMA, SC-FDMA, or another signal waveform.

In step S101, a terminal 20A autonomously selects a resource to be used for a PSCCH and a PSSCH from a resource selection window having a predetermined period. The resource selection window may be configured to the terminal 20 by the base station 10.

In step S102 and step S103, the terminal 20A transmits sidelink control information (SCI) via the PSCCH and/or PSSCH using the resource autonomously selected in step S101, and transmits SL data via the PSSCH. For example, the terminal 20A may transmit the PSCCH using a frequency resource that is adjacent to the PSSCH frequency resource, and using a time resource that is at least partially the same as the PSSCH time resource.

A terminal 20B receives the SCI (PSCCH and/or PSSCH) and the SL data (PSSCH) transmitted from the terminal 20A. The received SCI may include PSFCH resource information for the terminal 20B to send a HARQ-ACK for reception of the data. The terminal 20A may include the resource information of the autonomously selected resource in the SCI, and then transmit the SCI.

In step S104, the terminal 20B transmits the HARQ-ACK for the received data to the terminal 20A using a PSFCH resource determined from the received SCI.

In step S105, when the HARQ-ACK received in step S104 indicates a retransmission request, i.e., when the HARQ-ACK received in step S104 is NACK (a negative response), the terminal 20A retransmits the PSCCH and PSSCH to the terminal 20B. The terminal 20A may retransmit the PSCCH and the PSSCH using an autonomously selected resource.

In a case where HARQ control is not performed, step S104 and step S105 need not be performed.

Fig. 11 is a sequence diagram illustrating an example (2) of V2X operations. Blind retransmission may be performed without HARQ control that is used to improve a transmission success rate or distance reached.

In step S201, a terminal 20A autonomously selects a resource to be used for a PSCCH and a PSSCH from a resource selection window having a predetermined period of time. A resource selection window may be configured to the terminal 20 by the base station 10.

In step S202 and step S203, the terminal 20A transmits SCI via a PSCCH and/or a PSSCH and transmits SL data via the PSSCH using a resource autonomously selected in step S201. For example, the terminal 20A may transmit the PSCCH using a frequency resource that is adjacent to the PSSCH frequency resource using a time resource that is at least partially the same as the PSSCH time resource.

In step S204, the terminal 20A retransmits the SCI via the PSCCH and/or the PSSCH and the SL data via the PSSCH to the terminal 20B using the resource autonomously selected in step S201. Retransmission in step S204 may be performed multiple times.

In a case where blind retransmission is not performed, step S204 need not be performed.

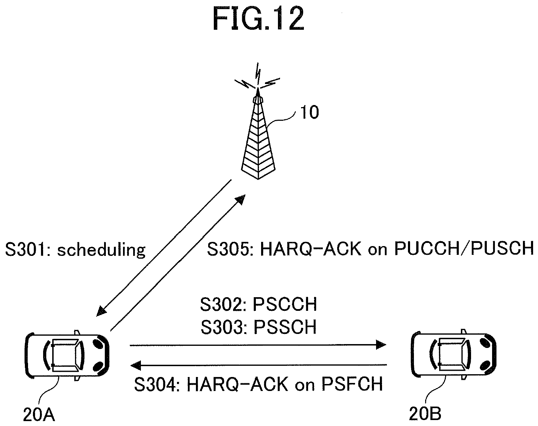

Fig. 12 is a sequence diagram illustrating an example (3) of V2X operations. A base station 10 may perform sidelink scheduling. That is, the base station 10 may determine a sidelink resource to be used by a terminal 20 and transmit information indicating the resource to the terminal 20. If HARQ control is applied, the base station 10 may transmit information indicating a PSFCH resource to the terminal 20.

In step S301, the base station 10 performs SL scheduling by sending downlink control information (DCI) to the terminal 20A via a PDCCH. Hereafter, for convenience, DCI for SL scheduling will be referred to as SL scheduling DCI.

In step S301, it is assumed that the base station 10 also transmits DCI for DL scheduling (which may be referred to as DL allocation) to the terminal 20A via a PDCCH. Hereafter, for convenience, DCI for DL scheduling will be referred to as DL scheduling DCI. The terminal 20A that has received the DL scheduling DCI, receives DL data via the PDSCH using a resource specified by the DL scheduling DCI.

In step S302 and step S303, the terminal 20A transmits sidelink control information (SCI) via a PSCCH and/or a PSSCH using a resource specified by the SL scheduling DCI and transmits SL data via the PSSCH. Note that in the SL scheduling DCI, only a PSSCH resource may be specified. In this case, for example, the terminal 20A may transmit the PSCCH using a frequency resource that is adjacent to the PSSCH frequency resource using a time resource that is at least partially the same as the PSSCH time resource.

The terminal 20B receives the SCI (PSCCH and/or PSSCH) and the SL data (PSSCH) transmitted from the terminal 20A. The SCI received via the PSCCH and/or the PSSCH, includes PSFCH resource information for the terminal 20B to transmit a HARQ-ACK for reception of the data.

The resource information is included in the DL scheduling DCI or SL scheduling DCI transmitted from the base station 10 in step S301, and the terminal 20A acquires the resource information from the DL scheduling DCI or the SL scheduling DCI and includes the acquired information in the SCI. Alternatively, the DCI transmitted from the base station 10 need not include the resource information, and the terminal 20A may autonomously include the resource information in the SCI, and then transmit the SCI.

In step S304, the terminal 20B transmits a HARQ-ACK for the received data to the terminal 20A using the PSFCH resource determined from the received SCI.

In step S305, for example, the terminal 20A transmits a HARQ-ACK using a physical uplink control channel (PUCCH) resource specified by the DL scheduling DCI (or SL scheduling DCI) at a timing (e.g., a slot-by-slot timing) specified by the DL scheduling DCI (or SL scheduling DCI), and the base station 10 receives the HARQ-ACK. The HARQ-ACK codebook may include: an HARQ-ACK received from the terminal 20B or an ARQ-ACK that is generated based on an un-received PSFCH; and a HARQ-ACK for DL data. However, a HARQ-ACK for DL data is not included in a case where the DL data is not allocated, for example. According to NR Rel. 16, the HARQ-ACK codebook does not include the HARQ-ACK for DL data.

In a case where HARQ control is not performed, step S304 and step S305 need not be performed.

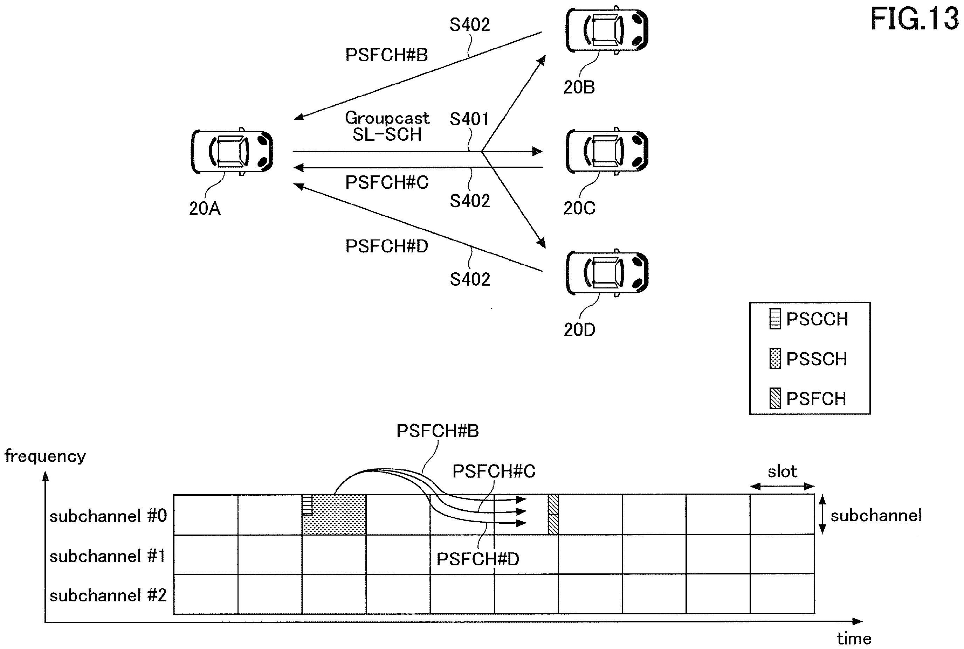

Fig. 13 is a sequence diagram illustrating an example (4) of V2X operations. As described above, it is assumed that a HARQ response is sent via a PSFCH, in NR sidelink. For example, as a format of a PSFCH, a format that is same as, or similar to, that of a physical uplink control channel (PUCCH) format 0 can be used. That is, a format of a PSFCH may have a physical resource block (PRB) size of 1, and may be a sequence-based format where ACK and NACK are identified by a sequence difference. A format of a PSFCH is not limited to this example. A PSFCH resource may be located at one symbol or a plurality of symbols, at the end of a slot. A cycle N is configured or specified in advance for a PSFCH resource. A cycle N may be configured or specified in advance in slot units.

In Fig. 13, a vertical axis corresponds to a frequency domain and a horizontal axis corresponds to a time domain. A PSCCH may be located at one symbol at the beginning of a slot, at a plurality of symbols from the beginning, or at a plurality of symbols from a symbol that is not at the beginning. A PSFCH may be located at one symbol at the end of a slot or at a plurality of symbols at the end of the slot. In the example illustrated in Fig. 13, three subchannels are configured in a resource pool, and two PSFCHs are located at the third slot after a slot at which the PSSCH is located. The arrows from the PSSCH to the PSFCHs indicate an example of the PSFCHs that are associated with the PSSCH.

In a case where a HARQ response in NR-V2X group-cast is an option 2 in which an ACK or NACK is to be transmitted, a resource used for sending and receiving a PSFCH is to be determined. As illustrated in Fig. 13, in step S401, a terminal 20A, which is a transmitting side terminal 20, performs group-cast for a terminal 20B, a terminal 20C, and a terminal 20D, which are receiving side terminals 20, via a SL-SCH. Subsequently, in step S402, the terminal 20B uses a PSFCH #B, the terminal 20C uses a PSFCH #C, and the terminal 20D uses a PSFCH #D, to transmit HARQ responses to the terminal 20A. As illustrated in the example of Fig. 13, in a case where the number of PSFCH resources available is less than the number of receiving terminals 20 belonging to the group, it is necessary to determine how to allocate PSFCH resources. The sending side terminal 20 may acquire the number of receiving side terminals 20 with respect to group-cast.

Physical sidelink broadcast channel (PSBCH) is a channel used for indicating TDD configuration from a terminal 20 to another terminal 20. Available resources for SL are indicated by the TDD configuration. A terminal 20 may use a UL part indicated by the TDD configuration for SL communication. Table 1 depicts an example of information transmitted via a PSBCH.

**[Table 1]**

| contents of PSBCH | number of bits | note |
|---|---|---|
| direct frame number (DFN) | 10 | |
| TDD configuration indication | 12 | information for whole system (for example, TDD-UL-DL common configuration and/or candidates for SL slots) |
| slot index | 7 | |
| in-coverage indicator | 1 | |
| reserved bits | 2 | |
| CRC | 24 | |
| total bits | 5 6 | |

As illustrated in Table 1, the contents of a PSBCH may include 10 bits of a direct frame number (DFN), 12 bits of TDD configuration indication (e.g., TDD-UL/DL configuration), 7 bits of slot index, 1 bit of in-coverage indicator, 2 reserved bits, 24 CRC bits, and thus, 56 bits in total. A TDD configuration indication is information of the whole system, and may be, for example, TDD-UL-DL common configuration or information indicating candidates for SL slots.

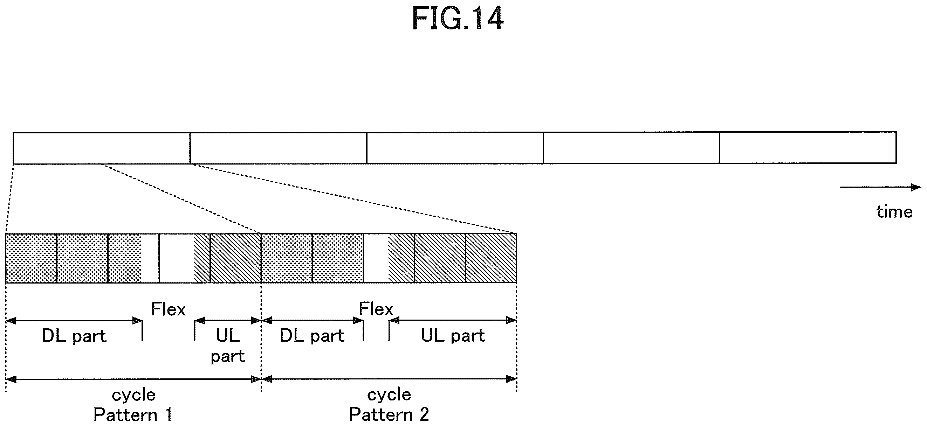

Fig. 14 is a diagram illustrating an example of TDD-UL/DL configuration. An example of TDD-UL/DL configuration in NR-Uu will now be described with reference to Fig. 14. In NR-Uu, two patterns, namely Pattern 1 and Pattern 2, can be configured using parameters "TDD-UL-DL-ConfigCommon", as illustrated in Fig. 14. Each parameter includes a "TDD-UL-DL-Pattern" including a cycle and the number of UL slots. Different values can be set for Pattern 1 and Pattern 2. "Flex" illustrated in Fig. 14 indicates an area that can be used for any of DL and UL.

Regarding the cycle, for example, any one of {0.5 ms, 0.625 ms, 1 ms, 1.25 ms, 2 ms, 2.5 ms, 5 ms, and 10 ms} may be configured. Further {3 ms and 4 ms} may be also configured. Configuration may be such that a multiple of a sum of a cycle of Pattern 1 and a cycle of Pattern 2 is 20 ms.

Regarding the UL slots, "nrofUplinkSlots" included in "TDD-UL-DL-Pattern" indicates the number of UL slots that are consecutively located toward the end of each pattern. For example, "nrofUplinkSlots" may be configured to a value from 0 slots to 80 slots.

Regarding the TDD configuration indication that is indicated via a PSBCH, X bits may indicate which pattern is to be used, Y bits may indicate a cycle, and Z bits may indicate the number of UL slots. For example, in a case where Pattern 1 and Pattern 2 are configured, the number of UL slots in each pattern may be indicated by Z bits.

In a case of maintaining the same flexibility as that of Uu, the TDD configuration indication requires 18 bits.

Regarding X, X=1 in order to indicate either Pattern 1 or Pattern 2.

Regarding Y, although 10 different values can be configured for each pattern, 16 combinations {1:(0.5, 0.5), 2:(0.625, 0.625), 3:(1, 1),4:(0.5, 2), 5:(2, 0.5), 6:(1.25, 1.25), 7: (1, 3), 8:(3, 1), 9:(2, 2), 10:(1, 4), 11:(4, 1), 12:(2, 3), 13:(3, 2), 14:(2.5, 2.5), 15:(5, 5), 16:(10, 10)} are allowed because of a restriction. Therefore, Y=4.

Regarding Z, in a case where a single pattern is configured, "nrofUplinkSlots" can be configured to a value from 1 to 80 slots because 0 is invalid in SL. In a case where two patterns are configured, it is necessary to specify up to 80*80=6400 candidates, and thus, Z=13.

Table 2 illustrates an example of a TDD configuration indication in Uu in a case where subcarrier spacing (SCS) = 30 kHz.

**[Table 2]**

| # | cycle (ms) | | candidates for number of UL slots | |
|---|---|---|---|---|
| | Pattern 1 | Pattern 2 | Pattern 1 | Pattern 2 |
| 1 | 0.5 | 0.5 | 1 | 1 |
| 2 | 0.625 | 0.625 | - | - |
| 3 | 1 | 1 | 2 | 2 |
| 4 | 0.5 | 2 | 1 | 4 |
| 5 | 2 | 0.5 | 4 | 1 |
| 6 | 1.25 | 1.25 | - | - |
| 7 | 1 | 3 | 2 | 6 |
| 8 | 3 | 1 | 6 | 2 |
| 9 | 2 | 2 | 4 | 4 |
| 10 | 1 | 4 | 2 | 8 |
| 11 | 4 | 1 | 8 | 2 |
| 12 | 2 | 3 | 4 | 6 |
| 13 | 3 | 2 | 6 | 4 |
| 14 | 2.5 | 2.5 | 5 | 5 |
| 15 | 5 | 5 | 10 | 10 |
| 16 | 10 | 10 | 20 | 20 |

In Table 2, Z becomes maximum at #16, and the number of combinations of candidates for numbers of UL slots is 20*20=400. Because of 2⁸=256<400<2⁹=512, 9 bits are required, and thus, Z=9.

Table 3 illustrates an example of a TDD configuration indication in Uu in a case where SCS = 120 kHz.

**[Table 3]**

| # | cycle (ms) | | candidates for number of UL slots | |
|---|---|---|---|---|
| | Pattern 1 | Pattern 2 | Pattern 1 | Pattern 2 |
| 1 | 0.5 | 0.5 | 4 | 4 |
| 2 | 0.625 | 0.625 | 5 | 5 |
| 3 | 1 | 1 | 8 | 8 |
| 4 | 0.5 | 2 | 4 | 16 |
| 5 | 2 | 0.5 | 16 | 4 |
| 6 | 1.25 | 1.25 | 10 | 10 |
| 7 | 1 | 3 | 8 | 24 |
| 8 | 3 | 1 | 24 | 8 |
| 9 | 2 | 2 | 16 | 16 |
| 10 | 1 | 4 | 8 | 32 |
| 11 | 4 | 1 | 32 | 8 |
| 12 | 2 | 3 | 16 | 24 |
| 13 | 3 | 2 | 24 | 16 |
| 14 | 2.5 | 2.5 | 20 | 20 |
| 15 | 5 | 5 | 40 | 40 |
| 16 | 10 | 10 | 80 | 80 |

In Table 3, Z becomes maximum at #16, and the number of combinations of candidates for the number of UL slots is 80*80=6400. Because of 2¹²=4096<6400<2¹³=8192, 13 bits are required, and thus, Z=13.

As described above, in a case of maintaining the same flexibility as that of Uu, 18 bits are required, whereas 12 bits illustrated in Table 1 are assumed for a TDD configuration indication in SL via a PSBCH. Therefore, in a case of indicating a TDD configuration indication in SL via a PSBCH with X=1, Y=4, and Z=7, the number of bits is insufficient for indicating configuration of #16 in Table 2 or any one of configurations of #7 through #16 in Table 3 because the number of combinations of candidates for the number of UL slots that can be configured is 2⁷=128.

With respect to the above, it is undesirable from a latency view point that, in a case where two patterns are configured, SL communication allows only one pattern in order to reduce the bit size.

Therefore, Z may be decreased by indicating the candidates for the number of UL slots with a granularity of the number of slots exceeding 1. For example, in a case where candidates for the number of UL slots are 10 slots, instead of indicating {1, 2, 3, 4, 5, 6, 7, 8, 9, 10}, {2, 4, 6, 8, 10} may be indicated with a granularity of 2 slots. It is also possible that, 1 slot may be always included as a candidate for the number of UL slots, and thus, {1, 2, 4, 6, 8, 10} may be indicated. Alternatively, {0, 2, 4, 6, 8} may be indicated by starting from 0 with a granularity of two slots; or {1, 3, 5, 7, 9} may be indicated by starting from 1 with a granularity of two slots.

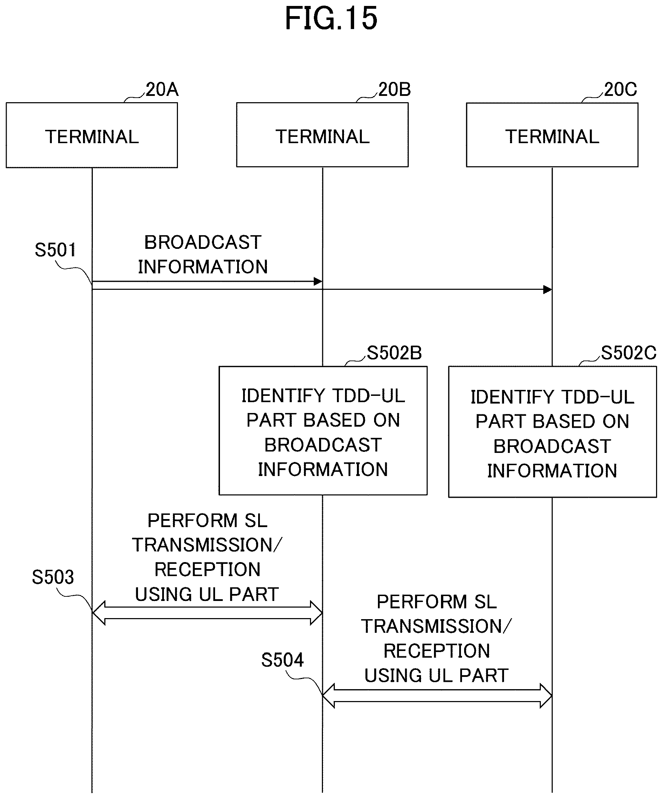

Fig. 15 is a sequence diagram illustrating an example of indicating TDD-UL/DL configuration according to an embodiment of the present invention. In step S501, a terminal 20A transmits broadcast information to a terminal 20B and a terminal 20C. The number of terminals 20 that receive the broadcast information may be one, three or more. The broadcast information is transmitted or received via a PSBCH and may include a TDD configuration indication. The TDD configuration indication may include above-described X bits, Y bits, and Z bits. In step S502B, the terminal 20B identifies a TDD-UL part based on the received broadcast information. Similarly, in step S502C, the terminal 20C identifies a TDD-UL part based on the received broadcast information. In step S503, the terminal 20B and the terminal 20A may perform SL transmission or reception using the identified UL parts. In step S504, the terminal 20B and the terminal 20C may perform SL transmission or reception using the identified UL parts. The TDD configuration indication transmitted or received via the PSBCH may be determined based on information received from a base station 10. The TDD configuration indication transmitted or received via the PSBCH may include information indicating a granularity applied to candidates for the number of UL slots.

For example, regarding the broadcast information indicated in step S501, in a case where the number of combinations of candidates for UL slots in two patterns exceeds 128, candidates for the number of UL slots may be indicated with a granularity of the number of slots greater than 1.

For example, in a case where SCS = 30 kHz and each of two patterns is configured as a 10 ms cycle, candidates for the number of UL slots may be indicated, on a per-pattern basis, as {2, 4, 6, 8, 10, 12, 14, 16, 18, 20} or {0, 2, 4, 6, 8, 10, 12, 14, 16, 18} with a granularity of 2. Candidates for the number of UL slots that are indicated may include 1 or may start from 1.

In a case where SCS = 120 kHz and two patterns are configured as a 1 ms cycle and a 10 ms cycle, respectively, candidates for the number of UL slots in the pattern with a 1 ms cycle may be indicated with a granularity of 2 for 1 slot through 8 slots. Candidates for the number of UL slots in the pattern with a 3 ms cycle may be indicated as {0, 2, 4, 6, 8, 10, 12, 14, 16, 18, 20, 22} or {2, 4, 6, 8, 10, 12, 14, 16, 18, 20, 22, 24} with a granularity of 2. Candidates for the number of UL slots that are indicated may include 1 or may start from 1.

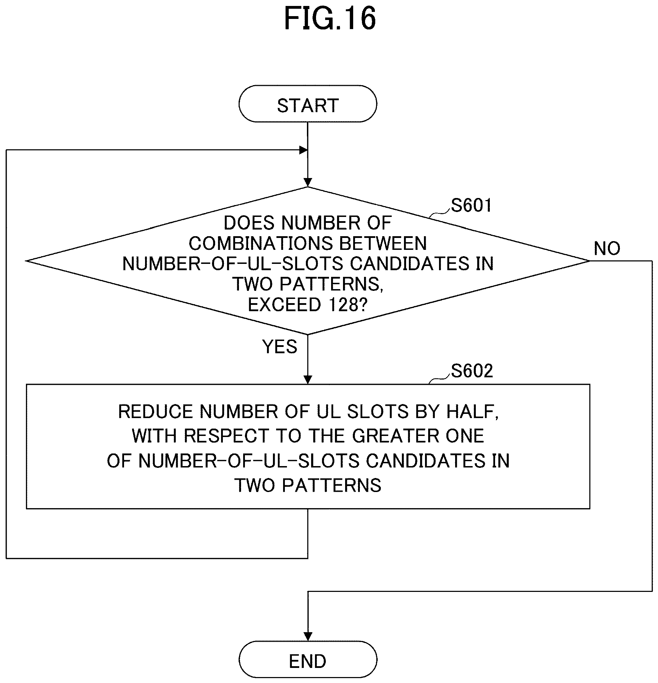

Fig. 16 is a flowchart illustrating an example of indicating the number of UL slots according to an embodiment of the present invention. For example, regarding the broadcast information indicated in Step S501 illustrated in Fig. 15, operations illustrated in Fig. 16 may be performed with respect to the TDD configuration indication in Uu illustrated in Table 2 or Table 3.

In step S601, it is determined whether the number of combinations of candidates for the number of UL slots in two patterns in the TDD configuration indication exceeds 128. In a case where the number exceeds 128 (YES of S601), the process proceeds to step S602, and in a case where the number is 128 or less (NO of S601), the process ends. In step S602, with respect to the greater one of number-of-UL-slots candidates in two patterns of the TDD configuration indication, the candidate for the number of UL slots is reduced by half, and the process returns to step S601. In other words, the granularity of K slots is changed to the granularity of 2K slots. The flowchart of Fig. 16 may be performed for each combination of Pattern 1 and Pattern 2 in Table 2 or 3.

For example, in a case where the flowchart of Fig. 16 is performed for #12 in Table 3, the number of candidates for the number of UL slots in Pattern 1 is 16 and the number of candidates for the number of UL slots in Pattern 2 is 24. Therefore, the number of combinations of candidates for the number of UL slots in two patterns is 16*24=384>128, and thus, the determination in step S601 is YES, and the process proceeds to step S602. In step S602, the number of candidates for the number of UL slots in Pattern 2 is changed from 24 to 12 because 16<24.

When step S601 is performed again, because the number of candidates for the number of UL slots in Pattern 1 is 16 and the number of candidates for the number of UL slots in Pattern 2 is 12, the number of combinations of candidates for the number of UL slots in two patterns is 16*12=192>128, determination in step S601 is YES and the process proceeds to step S602. In step S602, because 16>12, the number of candidates for the number of UL slot numbers in Pattern 1 is changed from 16 to 8.

When step S601 is performed again, because the number of candidates for the number of UL slots in Pattern 1 is 8 and the number of candidates for the number of UL slots in Pattern 2 is 12, the number of combinations of candidates for the number of UL slots in two patterns is 8*12=96<128, determination in step S601 is NO and the process ends. Thus, with respect to #12 in Table 3, the number of candidates for the number of UL slots in Pattern 1 is 8, and the number of candidates for the number of UL slots in Pattern 2 is 12.

Table 4 illustrates a result of performing the flowchart of Fig. 16 for each combination of Pattern 1 and Pattern 2 in Table 2.

**[Table 4]**

| # | cycle (ms) | | candidates for number of UL slots | |
|---|---|---|---|---|
| | Pattern 1 | Pattern 2 | Pattern 1 | Pattern 2 |
| 1 | 0.5 | 0.5 | 1 | 1 |
| 2 | 0.625 | 0.625 | - | - |
| 3 | 1 | 1 | 2 | 2 |
| 4 | 0.5 | 2 | 1 | 4 |
| 5 | 2 | 0.5 | 4 | 1 |
| 6 | 1.25 | 1.25 | - | - |
| 7 | 1 | 3 | 2 | 6 |
| 8 | 3 | 1 | 6 | 2 |
| 9 | 2 | 2 | 4 | 4 |
| 10 | 1 | 4 | 2 | 8 |
| 11 | 4 | 1 | 8 | 2 |
| 12 | 2 | 3 | 4 | 6 |
| 13 | 3 | 2 | 6 | 4 |
| 14 | 2.5 | 2.5 | 5 | 5 |
| 15 | 5 | 5 | 10 | 10 |
| 16 | 10 | 10 | 10 | 10 |

As illustrated in Table 4, with respect to #16, {candidates for the number of UL slots in Pattern 1, candidates for the number of UL slots in Pattern 2} is changed from {20, 20} to {10, 10}.

Table 5 illustrates a result of performing the flowchart of Fig. 16 for each combination of Pattern 1 and Pattern 2 in Table 3.

**[Table 5]**

| # | cycle (ms) | | candidates for number of UL slots | |
|---|---|---|---|---|
| | Pattern 1 | Pattern 2 | Pattern 1 | Pattern 2 |
| 1 | 0.5 | 0.5 | 4 | 4 |
| 2 | 0.625 | 0.625 | 5 | 5 |
| 3 | 1 | 1 | 8 | 8 |
| 4 | 0.5 | 2 | 4 | 16 |
| 5 | 2 | 0.5 | 16 | 4 |
| 6 | 1.25 | 1.25 | 10 | 10 |
| 7 | 1 | 3 | 8 | 12 |
| 8 | 3 | 1 | 12 | 8 |
| 9 | 2 | 2 | 8 | 16 |
| 10 | 1 | 4 | 8 | 16 |
| 11 | 4 | 1 | 16 | 8 |
| 12 | 2 | 3 | 8 | 12 |
| 13 | 3 | 2 | 12 | 8 |
| 14 | 2.5 | 2.5 | 10 | 10 |
| 15 | 5 | 5 | 10 | 10 |
| 16 | 10 | 10 | 10 | 10 |

As illustrated in Table 5, with respect to #7, {candidates for the number of UL slots of Pattern 1, candidates for the number of UL slots of Pattern 2} is changed from {8, 24} to {8, 12}. Similarly, {24, 8} is changed to {12, 8} with respect to #8. Similarly, {16, 16} is changed to {8, 16} with respect to #9. As illustrated in #9, in a case where candidates for the number of UL slots in Pattern 1 and candidates for the number of UL slots in Pattern 2 are the same value, the candidates for the number of UL slots in Pattern 1 may be reduced, or the candidates for the number of UL slots in Pattern 2 may be reduced.

Similarly, {8, 32} is changed to {8, 16} with respect to #10. Similarly, {32, 8} is changed to {16, 8} with respect to #11. Similarly, with respect to #12, {16, 24} is changed to {8, 12}. Similarly, {24, 16} is changed to {12, 8} with respect to #13. Similarly, {20, 20} is changed to {10, 10} with respect to #14. Similarly, {40, 40} is changed to {10, 10} with respect to #15. Similarly, {80, 80} is changed to {10, 10} with respect to #16.

In Step S602, instead of reducing the candidates for the number of UL slots with respect to the greater one of number-of-UL-slots candidates in two patterns by half, the candidates for the number of UL slots with respect to the greater one of number-of-UL-slots candidates in two patterns may be reduced to a different rate less than 1 such as two thirds. Also, in step S601, 128 for making determination concerning combinations of candidates for the number of UL slots in two patterns may be another value, for example 127 or 256. Alternatively, the value for making determination concerning combinations of candidates for the number of UL slots in two patterns may be determined based on Z.

In a case where the numbers of candidates in Pattern 1 and Pattern 2 are the same and the number of combinations of the candidates exceeds 128, either one of the granularities may be changed first. For example, the number of candidates for UL slots may be reduced by half with respect to Pattern 1, or the number of candidates for UL slots may be reduced by half with respect to Pattern 2.

In a case where the granularity of candidates for the number of UL slots is made to be greater than 1 slot, the maximum number calculated based on the granularity, from among the numbers of UL slots smaller than the number of UL slots given by TDD configuration information received from a base station 10, may be selected as a TDD configuration indication to be transmitted or received via a PSBCH. For example, in a case where the number of UL slots given by TDD configuration information received from a base station 10 is L and the granularity with respect to candidates for the number of UL slots is J, the value to be selected may be given by J×floor(L/J)+G. G may be a specific value, may be 0, or may be the smallest value among the candidates for the number of UL slots.

In a case where the number of combinations of the candidates for the numbers of UL slots in two patterns exceeds 128, a TDD configuration indication indicating that only one pattern can be used for SL, may be transmitted or received via a PSBCH; and in a case where the number of combinations does not exceed 128, a TDD configuration indication indicating that both patterns can be used for SL, may be transmitted or received via a PSBCH.

In a case where two patterns are configured in the TDD configuration indication, candidates for the number of UL slots that can be configured for Pattern 1 may be defined as [1, N], candidates for the number of UL slots that can be configured for Pattern 2 may be defined as [0, M-1], N may be defined as the number of UL slots for Pattern 1, and M may be defined as the number of UL slots for Pattern 2.

According to an embodiment described above, by changing a granularity applied to an indication of the number of UL slots depending on the number of bits (e.g., X+Y+Z=12 bits) that can be used for a TDD configuration indication, an indication related to UL slots having two patterns can be implemented, and a terminal 20 can identify a resource that can be used for sidelink communication based on the indication.

That is, with respect to terminal-to-terminal direct communication, it is possible to efficiently indicate available resources.

### (Apparatus configuration)

Next, a functional configuration example of a base station 10 and a terminal 20 for performing processes and operations described above will be described. The base station 10 and terminal 20 include functions for implementing an embodiment described above. However, each of the base station 10 and the terminal 20 may include only some of the functions of an embodiment.

### <Base station 10>

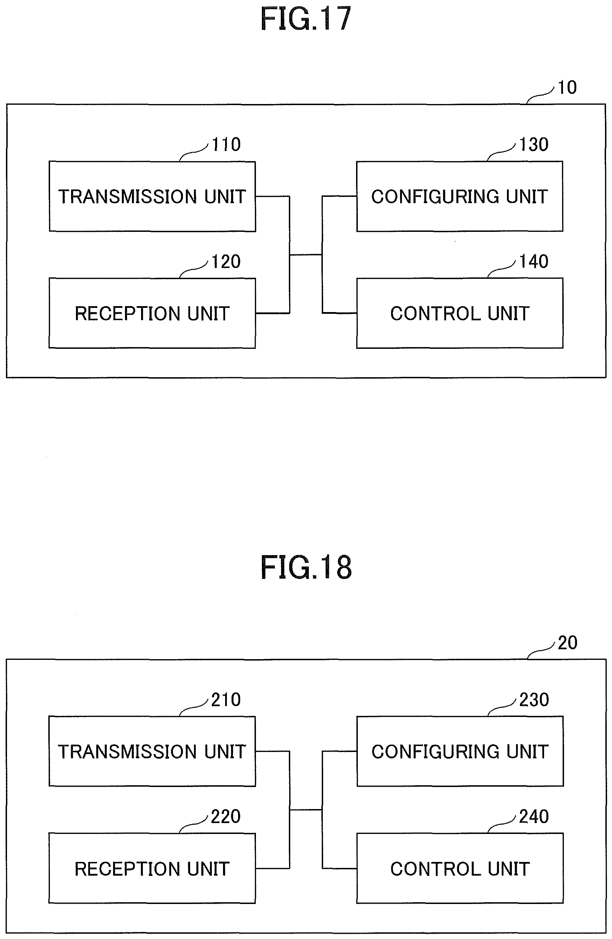

Fig. 17 is a diagram illustrating an example of a functional configuration of the base station 10. As depicted in Fig. 17, the base station 10 includes a transmission unit 110, a reception unit 120, a configurating unit 130, and a control unit 140. The functional configuration depicted in Fig. 17 is only one example. As long as the operations according to an embodiment of the present invention can be performed, the functional categories and the names of the functional units may be any ones.

The transmission unit 110 includes a function for generating a signal to be transmitted to a terminal 20 side and transmitting the signal wirelessly. The reception unit 120 includes a function for receiving various signals transmitted from the terminal 20 and acquiring, for example, information of a higher layer from the received signals. The transmission unit 110 has functions to transmit NR-PSS, NR-SSS, NR-PBCH, DL/UL control signals, DL reference signals, and the like to the terminal 20.

The configuring unit 130 stores preconfigured configuration information and various configuration information to be transmitted to the terminal 20 in a storage device and reads the information from the storage device if necessary. The contents of the configuration information are, for example, information pertaining to configuration of D2D communication.

As described concerning an embodiment, the control unit 140 performs processing pertaining to configuration enabling the terminal 20 to perform D2D communication. The control unit 140 transmits scheduling of D2D communication and DL communication to the terminal 20 through the transmission unit 110. The control unit 140 receives information pertaining to a HARQ response of D2D communication and DL communication from the terminal 20 via the reception unit 120. A functional unit related to signal transmission included in the control unit 140 may be included in the transmission unit 110, and a functional unit related to signal reception included in the control unit 140 may be included in the reception unit 120.

### <Terminal 20>

Fig. 18 is a diagram illustrating an example of a functional configuration of the terminal 20. As depicted in Fig. 18, the terminal 20 includes a transmission unit 210, a reception unit 220, a configurating unit 230, and a control unit 240. The functional configuration depicted in Fig. 18 is only one example. As long as the operations according to an embodiment of the present invention can be performed, the functional categories and the names of the functional units may be any ones.

The transmission unit 210 generates a transmission signal from transmission data and wirelessly transmits the transmission signal. The reception unit 220 receives various signals wirelessly and acquires a signal of a higher layer from a received signal of a physical layer. The reception unit 220 has functions to receive NR-PSS, NR-SSS, NR-PBCH, DL/UL/SL control signals, reference signals, and the like transmitted from the base station 10. For example, the transmission unit 210 transmits a physical sidelink control channel (PSCCH), a physical sidelink shared channel (PSSCH), a physical sidelink discovery channel (PSDCH), a physical sidelink broadcast channel (PSBCH), and the like to another terminal 20 as D2D communication, and the reception unit 220 receives PSCCH, PSSCCH, PSDCH, PSDCH, and the like from the other terminal 20.

The configuring unit 230 stores various configuration information received from the base station 10 or the other terminal 20 through the reception unit 220 in a storage device and reads it from the storage device as necessary. The configuring unit 230 also stores preconfigured configuration information. The contents of the configuration information are, for example, information pertaining to configuration of D2D communication.

The control unit 240 controls D2D communication with the other terminal 20 as described above with regard to an embodiment. The control unit 240 performs processing related to a HARQ of D2D communication and DL communication. The control unit 240 transmits information pertaining to a HARQ response of D2D communication and DL communication to the other terminal 20 according to scheduling by the base station 10. The control unit 240 may perform scheduling of D2D communication for the other terminal 20. The control unit 240 may autonomously select a resource to be used for D2D communication from a resource selection window based on a sensing result. The control unit 240 performs processing pertaining to PSBCH transmission and reception with respect to D2D communication. A functional unit related to signal transmission included in the control unit 240 may be included in the transmission unit 210, and a functional unit related to signal reception included in the control unit 240 may be included in the reception unit 220.

### (Hardware configuration)

The block diagrams (Figs. 17 and 18) used above in the description of an embodiment illustrate blocks on a per-function basis. These functional blocks (elements) are implemented by any combinations of at least one of hardware and software. A method of implementing each functional block is not particularly limited. That is, each functional block may be implemented using a single device that is physically or logically combined. Each functional block may be implemented also using two or more devices that are physically or logically separated and directly or indirectly connected (e.g., using a wired manner, a wireless manner, etc.). Each functional block may be implemented by combining software with the above-described one or more devices.

Functions include, but are not limited to, judging, determining, calculating, processing, deriving, researching, searching, checking, receiving, transmitting outputting, accessing, resolving, selecting, establishing, comparing, assuming, expecting, regarding, broadcasting, notifying, communicating, forwarding, configuring, reconfiguring, allocating, mapping, and assigning. For example, a functional block (element) that has a function of transmitting is referred to as a transmission unit or a transmitter. In any case, as described above, a method of implementation is not particularly limited.

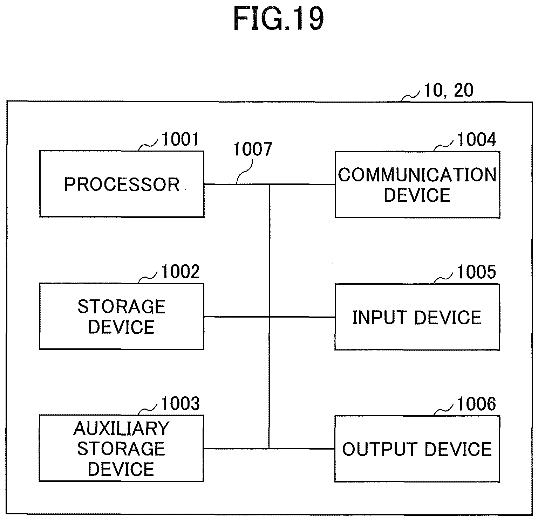

For example, a base station 10, a terminal 20, etc., according to an embodiment of the present disclosure may function as a computer for processing a radio communication method of the present disclosure. Fig. 19 is a diagram illustrating an example of a hardware configuration of a base station 10 and a terminal 20 according to an embodiment of the present disclosure. A base station 10 and a terminal 20 described above may be physically configured as computer devices each including a processor 1001, a storage device 1002, an auxiliary storage device 1003, a communication device 1004, an input device 1005, an output device 1006, a bus 1007, and the like.

In the following description, a word "device" can be read as a circuit, a unit, etc. Hardware configurations of a base station 10 and a terminal 20 each may be configured to include one or more of the devices depicted in the figure or may be configured without some of the devices.

As a result of predetermined software (program(s)) being read by hardware such as the processor 1001 and the storage device 1002, operations are performed by the processor 1001, communication is controlled by the communication device 1004, and at least one of reading data from and writing data to the storage device 1002 and the auxiliary storage device 1003 is controlled. Thereby, each of the functions of a base station 10 and a terminal 20 is implemented.

The processor 1001 operates an operating system, for example, to control an entire computer. The processor 1001 may include a central processing unit (CPU) including an interface with peripheral devices, a controller, an arithmetic unit, a register, and the like. For example, the above-described control unit 140, control unit 240, and the like may be implemented by processors 1001.

The processor 1001 reads a program (program code), software module, data, or the like from at least one of the auxiliary storage device 1003 and the communication apparatus 1004 to the storage device 1002 and performs various processing in accordance with it. As the program, a program that causes a computer to execute at least some of the operations described above concerning an embodiment is used. For example, the control unit 140 of a base station 10 depicted in Fig. 17 may be implemented by a control program that is stored in the storage device 1002 and operating by the processor 1001. For example, the control unit 240 of a terminal 20 illustrated in Fig. 18 may be implemented by a control program stored in the storage device 1002 and operating by the processor 1001. Although the foregoing processes have been described as being executed by one processor 1001, they may be executed simultaneously or sequentially by two or more processors 1001. A processor 1001 may be implemented by one or more chips. A program may be transmitted from a network via a telecommunication line.

The storage device 1002 is a computer-readable recording medium and may be at least one of, for example, a read only memory (ROM), an erasable programmable ROM (EPROM), an electrically erasable programmable ROM (EEPROM), a random access memory (RAM), and the like. The storage device 1002 may be referred to as a register, cache, main memory, or the like. The storage device 1002 can store a program (program code), software module, etc., executable to implement a communication method according to an embodiment of the present disclosure.

The auxiliary storage device 1003 is a computer-readable recording medium and may be at least one of an optical disk, such as a compact disc ROM (CD-ROM), a hard disk drive, a flexible disk, a magneto-optical disk (e.g., a compact disk, a digital versatile disk, or a Blu-ray (registered trademark) disk), a smart card, a flash memory (e.g., a card, a stick, or a key drive), a floppy (registered trademark) disk, a magnetic strip, and the like. The above-described recording medium may be, for example, a database, a server, or another suitable medium that includes at least one of the storage device 1002 and the auxiliary storage device 1003.

The communication device 1004 is hardware (transmitting and receiving device) for performing communication between computers via at least one of a wired network and a wireless network, and is also referred to as a network device, a network controller, a network card, a communication module, or the like. The communications device 1004 may include a high frequency switch, duplexer, filter, frequency synthesizer, and/or the like, for example, to implement at least one of frequency division duplex (FDD) and time division duplex (TDD). For example, a transmitting and receiving antenna, an amplifier unit, a transmitting and reception unit, a transmission line interface, and the like may be implemented in the communication device 1004. The transmitting and reception unit may be implemented as a transmission unit and a reception unit that are physically or logically separated.

The input device 1005 is an input device (e.g., a keyboard, mouse, microphone, switch, button, sensor, etc.) that receives an external input. The output device 1006 is an output device (e.g., a display, speaker, LED lamp, etc.) that performs outputting. The input device 1005 and the output device 1006 may have an integral configuration (for example, a touch panel).

Each of the devices, such as the processor 1001 and the storage device 1002, is connected by the bus 1007 for communicating information. The bus 1007 may be a single bus or may include a different bus for each of inter-device connections.

Each of a base station 10 and a terminal 20 may also include hardware such as a microprocessor, a digital signal processor (DSP), an application specific integrated circuit (ASIC), a programmable logic device (PLD), a field programmable gate array (FPGA), or the like. Part or all of each of the functional blocks may be implemented by the above-mentioned hardware. For example, the processor 1001 may be implemented by at least one of these types of hardware.

### (Summary of Embodiments)

As described above, according to an embodiment of the present invention, there is provided a terminal that includes a reception unit configured to receive broadcast information from another terminal; a control unit configured to identify a resource to be used for terminal-to-terminal direct communication based on time intervals based on a specific granularity indicated via a time division duplex (TDD) configuration included in the broadcast information; and a communication unit configured to perform terminal-to-terminal direct communication using the resource.

Thus, by changing the granularity applied to an indication of the numbers of UL slots depending on the number of bits (e.g., X+Y+Z=12 bits) that can be used for the TDD configuration indication, an indication related to UL slots having two patterns can be implemented, and a terminal 20 can identify a resource that can be used for sidelink communication based on the indication. That is, with respect to terminal-to-terminal direct communication, it is possible to efficiently indicate available resources.

The granularity may be greater than a granularity via a TDD configuration applied to uplink (UL). This enables implementation of an indication related to UL slots having two patterns by changing the granularity applied to the indication of the numbers of UL slots.

With respect to TDD configuration included in the broadcast information, in a case where the number of combinations of configurable time intervals is greater than a predetermined threshold, the granularity may be increased. This enables implementation of an indication related to UL slots having two patterns by changing the granularity applied to the indication of the numbers of UL slots.

The predetermined threshold may be determined based on the number of bits that can be used in the TDD configuration included in the broadcast information. Thus, an indication related to UL slots having two patterns can be implemented by changing of the granularity applied to the indication of the number of UL slots depending on the number of bits (e.g., X+Y+Z=12 bits) that can be used for the TDD configuration indication.

With respect to the TDD configuration included in the broadcast information, there are configurable two types of time intervals, a first type of a time interval can be configured from 1 unit, and a second type of a time interval can be configured from 0 units. This enables an implementation of an indication related to UL slots having one of two patterns and an indication related to UL slots having the other of two patterns.

Further, in a communication method according to an embodiment of the present invention, a terminal performs: receiving broadcast information from another terminal; identifying a resource that can be used for terminal-to-terminal direct communication based on time intervals based on a specific granularity indicated via a time division duplex (TDD) configuration included in the broadcast information; and performing terminal-to-terminal direct communication using the resource.

Thus, by changing the granularity applied to the indication of the numbers of UL slots depending on the number of bits (e.g., X+Y+Z=12 bits) that can be used for the TDD configuration indication, an indication related to UL slots having two patterns can be implemented, and a terminal 20 can identify a resource that can be used for sidelink communication based on the indication. That is, with respect to terminal-to-terminal direct communication, it is possible to efficiently indicate available resources.

### (Supplement to Embodiments)

Thus, although the embodiments of the present invention have been described, the disclosed invention is not limited to such embodiments, and various modifications, alternatives, substitutions, etc. will be understood by those skilled in the art. Specific numerical examples have been used to facilitate understanding of the invention, but, unless otherwise specified, they are merely examples and any appropriate values may be used. The classifications of items in the above descriptions are not essential to the present invention, and matters described in two or more items may be used in combination as needed, or a matter described in one item may be applied to a matter described in another item (unless there occurs inconsistency). The functional or processing unit boundaries in the functional block diagrams do not necessarily correspond to physical element boundaries. Operations of a plurality of functional units may be performed physically by one element, or an operation of one functional unit may be performed physically by a plurality of elements. As for the processing steps described with regard to the embodiments, the order of processes may be changed as long as there occurs no inconsistency. For convenience of process description, a base station 10 and a terminal 20 have been described using the functional block diagrams, but such apparatuses may be implemented in hardware, software, or a combination thereof. Software operated by the processor of the base station 10 in accordance with the embodiments of the present invention and software operated by the processor of the terminal 20 in accordance with the embodiments of the present invention may be stored in a random access memory (RAM), flash memory, read-only memory (ROM), EPROM, EEPROM, register, hard disk (HDD), removable disk, CD-ROM, database, server, or any other suitable storage medium.

Information may also be communicated in another way, as well as the above-described ways of the embodiments for the present disclosure. For example, notification of information may be effected by physical layer signaling (e.g., downlink control information (DCI) or uplink control information (UCI)), upper layer signaling (e.g., radio resource control (RRC) signaling, medium access control (MAC) signaling, master information block (MIB), system information block(SIB)), another signal, or a combination thereof. RRC signaling may also be referred to as an RRC message, and, for example, may be RRC connection setup message, RRC connection reconstruction message, or the like.

Each embodiment described with respect to the present disclosure may be applied to at least one of systems using long term evolution (LTE), LTE-advanced (LTE-A), SUPER 3G, IMT-Advanced, 4th generation (4G) mobile communication system, 5th generation (5G) mobile communication system), future radio access (FRA), new radio (NR), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20 ultra-wideband (UWB), Bluetooth (registered trademark), a system using another suitable system, and next generation systems extended based thereon. Each embodiment described with respect to the present disclosure may be applied a combination of a plurality of systems (e.g., a combination of at least one of LTE and LTE-A with 5G, etc.).

The processing steps, sequences, flowcharts, etc. of each embodiment described herein may be reordered unless there occurs any inconsistency. For example, the methods described with respect to the present disclosure are described using exemplary sequences of various step elements and are not limited to the particular orders described.

A certain operation described herein as being performed by a base station 10 may be performed by its upper node in some cases. In a network including one or more network nodes including a base station 10, it is apparent that various operations performed for communication with a terminal 20 may be performed by at least one of the base station 10 and another network node (e.g., but not limited to, MME, S-GW, etc.) than the base station 10. Although the above illustrates that there is only one other network node than a base station 10, the other network node may be a combination of multiple other network nodes (e.g., MME and S-GW) .

Information or a signal described with respect to the present disclosure can be output from a higher layer (or lower layer) to a lower layer (or higher layer). Information or a signal described with respect to the present disclosure may be input or output through multiple network nodes.

Input or output information may be stored in a certain location (e.g., memory) or managed using a management table. Input or output information may be overwritten, updated, or added with other information. Output information or the like may be deleted. Input information or the like may be transmitted to another apparatus.

Determination with respect to the present disclosure may be made by a value (0 or 1) expressed with 1 bit, by a true or false value (Boolean: true or false), or through a numerical comparison (e.g., a comparison with a predetermined value).

Whether referred to as software, firmware, middleware, microcode, hardware description language, or any other name, software should be broadly interpreted to mean, an instruction, a set of instructions, code, code segment, program code, program, subprogram, software module, application, software application, software package, routine, subroutine, object, executable file, executable thread, procedure, function, and the like.

Software, instruction, information, and the like may be transmitted or received also via a transmission medium. For example, when software is transmitted from a website, server, or another remote source using at least one of a wired communication technology (such as coaxial cable, fiber optic cable, twisted pair, or digital subscriber line) and a wireless communication technology (infrared, microwave, or the like), at least one of these wired communication technology and wireless communication technology is included in the definition of a transmission medium.

Information, signal and the like described with respect to the present disclosure may be expressed using any of a variety of different technologies. For example, data, instructions, command, information, signal, bit, symbol, chip, etc., which may be referred to throughout the above description, may be expressed by a voltage, current, electromagnetic wave, a magnetic field or magnetic particle, an optical field or photon, or any combination thereof.

The terms described with respect to the present disclosure and those necessary for understanding the present disclosure may be replaced by terms having the same or similar meanings. For example, at least one of a channel and a symbol may be a signal (signaling). A signal may be also a message. A component carrier (CC) may be referred to also as a carrier frequency, cell, frequency carrier, or the like.

As used with respect to the present disclosure, the terms "system" and "network" are used interchangeably.

Information, parameter, or the like described with respect to the present disclosure may be expressed using an absolute value, relative value from a predetermined value, or may be expressed using corresponding different information. For example, a radio resource may be indicated by an index.

The names used for the parameters described above are not restrictive in any respect. The mathematical equations using these parameters may be different from those explicitly disclosed with respect to the present disclosure. Because the various channels (e.g., PUCCH, PDCCH, etc.) and information elements can be identified by any suitable names, the various names allocated to these various channels and information elements are not restrictive in any respect.

With respect to the present disclosure, terms such as "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as also a macro cell, a small cell, a femtocell, a picocell, or the like.

A base station can cover one or more (e.g., three) cells. In a case where a base station covers a plurality of cells, the entire coverage area of the base station can be divided into a plurality of smaller areas, each of which can also provide a communication service via a base station subsystem (e.g., a small indoor base station (remote radio head (RRH)). The term "cell" or "sector" refers to part or all of the coverage area of at least one of the base station and base station subsystem that provides a communication service at the coverage.

With respect to the present disclosure, terms such as "mobile station (MS)", "user terminal", "user equipment (UE)", "terminal", and the like may be used interchangeably.

A mobile station may be referred to by one of ordinary skilled in the art as a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or any one of some other suitable terms.

At least one of a base station and a mobile station may be referred to as a transmitter, receiver, communication apparatus, or the like. At least one of a base station and a mobile station may be a device mounted on a mobile body, a mobile body itself, or the like. A mobile may be a vehicle (e.g., a car, an airplane, etc.), an unmanned mobile (e.g., a drone, an automated vehicle, etc.), or a robot (manned or unmanned). At least one of a base station and a mobile station may be an apparatus that does not necessarily move during a communication operation. For example, at least one of a base station and a mobile station may be an internet of things (IoT) apparatus such as a sensor.

A base station with respect to the present disclosure may be read as a user terminal. For example, various aspects/embodiments of the present disclosure may be applied to a configuration in which communication between a base station and a user terminal is replaced by communication between multiple terminals 20 (e.g., may be referred to as device-to-device (D2D), vehicle-to-everything (V2X), etc.). In this case, a terminal 20 may have a function that a base station 10 has and has been described above. Each of words "upstream" and "downstream" may read as a word (e.g., "side") corresponding to terminal-to-terminal communication. For example, an upstream channel, a downstream channel, or the like may be read as a side channel.

Similarly, a user terminal with respect to the present disclosure may be read as a base station. In this case, a base station may have a function that a user terminal has and has been described above.

The term "determining" used with respect to the present disclosure may mean a wide variety of operations. "Determining" may mean considering to have determined to have judged, calculated, computed, processed, derived, investigated, looked up, searched, investigated (e.g., searched a table, a database, or another data structure), ascertained, or the like. "Determining" may mean considering to have determined to have received (e.g., received information), transmitted (e.g., sent information), inputted, outputted, and accessed (e.g., accessed data in a memory), or the like. "Determining" may mean considering as having determined to have resolved, selected, chose, established, compared, etc. That is, "determining" may mean considering to have determined a certain action. "Determining" may be read as "assuming," "expecting", "considering", etc.

The term "connected" or "coupled" or any variations thereof each means any direct or indirect connection or connection between two or more elements and may mean a case of a presence of one or more intermediate elements between two elements "connected" or "coupled" with each other. Coupling or connection between elements may be physical, logical, or a combination thereof. For example, "connection" may be read as "access". As used with respect to the present disclosure, two elements may be considered as being "connected" or "coupled" to each other, using at least one of one or more wires, cables, and printed electrical connections, or using, as a number of non-limiting and non-inclusive examples, electromagnetic energy having wavelengths in the radio frequency region, the microwave region, the light (visible or invisible) region, or the like.

A reference signal may be abbreviated as RS or may be referred to as a pilot, depending on standards applied.

As used with respect to the present disclosure, the expression "based on" does not mean "based on only" unless otherwise specified. In other words, the expression "based on" means both "based on only" and "based on at least".

Any reference to elements using designations such as "first" and "second" as used with respect to the present disclosure does not generally limit the amounts or order of those elements. These designations can be used with respect to the present disclosure as a convenient way to distinguish between two or more elements. Thus, references to first and second elements do not imply that only two elements can be used or that the first element must in some way precede the second element.

"Means" in the configuration of each of the above apparatuses may be replaced by "part", "circuit", "device", etc.

When the terms "include", "including" and variations thereof are used with respect to the present disclosure, these terms are intended to be comprehensive as the term "comprising". Moreover, the term "or" used with respect to the present disclosure is not intended to be "exclusive or".

A radio frame may include one or more frames with respect to time domain. A single frame or each of plural frames with respect to time domain may be referred to as a subframe. A subframe may further include one or more slots with respect to time domain. A subframe may have a fixed length of time (e.g., 1 ms) independent of a numerology.

A numerology may be a communication parameter that is applied to at least one of transmission and reception of a signal or channel. A numerology may indicate at least one of, for example, a subcarrier spacing (SCS), bandwidth, symbol length, cyclic prefix length, transmission time interval (TTI), number of symbols per TTI, radio frame configuration, certain filtering process performed by a transceiver with respect to frequency domain, and certain windowing process performed by a transceiver with respect to time domain.

A slot may include one or more symbols with respect to time domain (orthogonal frequency division multiplexing (OFDM) symbols, single carrier frequency division multiple access (SC-FDMA) symbols, or the like). A slot may be a time unit based on a numerology.

A slot may include a plurality of mini-slots. Each mini-slot may include one or more symbols with respect to time domain. A mini-slot may also be referred to as a sub-slot. A mini-slot may include fewer symbols than a slot. A PDSCH (or PUSCH) transmitted at a time unit greater than a mini-slot may be referred to as a PDSCH (or PUSCH) mapping type A. A PDSCH (or PUSCH) transmitted using a mini-slot may be referred to as a PDSCH (or PUSCH) mapping type B.

Each of a radio frame, subframe, slot, mini-slot, and symbol indicates a time unit for transmitting a signal. Also corresponding different names may be used for a radio frame, subframe, slot, mini-slot and a symbol, respectively.

For example, one subframe may be referred to as a transmission time interval (TTI), multiple consecutive subframes may be referred to as a TTI, or one slot or one mini-slot may be referred to as a TTI. That is, at least one of a subframe and a TTI may be a subframe (1 ms) with respect to existing LTE, may have a period shorter than 1 ms (e.g., corresponding to 1 through 13 symbols), or may have a period longer than 1 ms. A unit expressing a TTI may be referred to as a slot, a mini-slot, or the like, instead of a subframe.

A TTI means, for example, a minimum time unit with respect to scheduling for radio communication. For example, in an LTE system, a base station performs scheduling for each terminal 20 to allocate a radio resource (such as frequency bandwidth, transmission power, etc. that can be used for the terminal 20) in TTI units. A definition of TTI is not limited to this.

A TTI may be a transmission time unit with respect to a channel-encoded data packet (transport block), code block, codeword, or the like, or may be a processing unit with respect to scheduling, link adaptation, or the like. When a TTI is given, a time segment (e.g., the number of symbols) where a transport block, code block, codeword, or the like is actually mapped may be shorter than the TTI.

If one slot or one mini-slot is referred to as a TTI, one or more TTIs (i.e., one or more slots or one or more mini-slots) may be the minimum time unit with respect to scheduling. The number of slots (mini-slots) included in the minimum time unit with respect to scheduling may be controlled.

A TTI having a time length of 1 ms may be referred to as a normal TTI (a TTI according to LTE Rel. 8-12), a long TTI, a normal subframe, a long subframe, a slot, or the like. A TTI that is shorter than a normal TTI may be referred to as a shortened TTI, a short TTI, a partial or fractional TTI, a shortened subframe, a short subframe, a mini-slot, a sub-slot, a slot, or the like.

A long TTI (e.g., a normal TTI, subframe, etc.) may be read as a TTI having a time length exceeding 1 ms. A short TTI (e.g., shortened TTI, etc.) may be read as a TTI having a TTI length less than a TTI length of a long TTI and greater than 1 ms.

A resource block (RB) is a resource allocation unit with respect to time domain and frequency domain, and may include one or more consecutive subcarriers with respect to frequency domain. The number of subcarriers included in a RB may be constant, regardless of a numerology, and, for example, may be 12. The number of subcarriers included in a RB may be determined based on a numerology.

A RB may include one or more symbols with respect to time domain, and may have a length of 1 slot, 1 mini-slot, 1 subframe, or 1 TTI. 1 TTI, 1 subframe, etc., may each include one or more resource blocks.

One or more RBs may be referred to as physical resource blocks (PRBs), subcarrier groups (SCGs), resource element groups (REGs), PRB pairs, RB pairs, or the like.

A resource block may include one or more resource elements (RE). For example, 1 RE may be a radio resource area of one subcarrier and one symbol.

A bandwidth part (BWP, which may also be referred to as a partial bandwidth, etc.) may mean a subset of consecutive common RBs (common resource blocks) for a certain numerology with respect to a carrier. A common RB may be identified by an index of a RB with respect to a common reference point of a carrier. A PRB may be defined using a BWP and may be numbered within the BWP.

A BWP may mean each of a BWP for UL (UL BWP) and a BWP for DL (DL BWP). One or more BWPs may be configured in one carrier for a terminal 20.

At least one of thus configured BWPs may be active, and a terminal 20 need not assume to transmit or receive a predetermined signal or channel outside the active BWP. The term "cell", "carrier", or the like with respect to the present disclosure may be read as a "BWP."

Structures of a radio frame, a subframe, a slot, a mini-slot, a symbol, and the like described above are exemplary only. For example, the number of subframes included in a radio frame, the number of slots per subframe or radio frame, the number of mini-slots included in a slot, the number of symbols and RBs included in a slot or mini-slot, the number of subcarriers included in a RB, the number of symbols in a TTI, a symbol length, a cyclic prefix (CP) length, and the like may be changed.

With respect to the present disclosure, in a case where an article, for example, a, an, or the in English, is added through translation, a noun following such an article may be plural.

With respect to the present disclosure, a term "A and B are different" may mean that "A and B are different from each other". The same term may also mean that "each of A and B is different from C". Terms "separated", "coupled", and the like may be interpreted also in the same manner as "different".

The embodiments described above may be used alone, in combination, or in a manner of being switched upon implementation. Indication of predetermined information (e.g., indication of "being "X") is not limited to being implemented explicitly. Also implicit implementation is possible (e.g., by not performing indication of the predetermined information).

The transmission unit 210 and the reception unit 220 with respect to the present disclosure are examples of a communication unit. The number of US slots is an example of a time interval

A SCI or a 1st stage SCI with respect to the present disclosure is an example of first control information. A 2nd stage SCI is an example of second control information.

It is clear that, although the present disclosure has been described in detail above, those skilled in the art will understand that the present disclosure is not limited to the embodiments described in the present disclosure. The present disclosure may be implemented in a modified or changed mode without departing from the spirit and scope of the present disclosure defined by the claims. Thus, the description of the present disclosure is for illustrative purpose only and does not have any restrictive meaning with respect to the present disclosure.

### [Description of Signs]

10 Base station
110 Transmission unit
120 Reception unit
130 Configuring unit
140 Control unit
20 Terminal
210 Transmission unit
220 Reception unit
230 Configuring unit
240 Control unit
1001 Processor
1002 Storage device
1003 Auxiliary storage device
1004 Communication device
1005 Input device
1006 Output device

## Claims

1. A terminal comprising:
a reception unit configured to receive broadcast information from another terminal;
a control unit configured to identify a resource that can be used for terminal-to-terminal direct communication, based on time intervals based on a specific granularity indicated via a time division duplex (TDD) configuration included in the broadcast information; and
a communication unit configured to perform terminal-to-terminal direct communication using the resource.

2. The terminal as claimed in claim 1,
wherein
the granularity is greater than a granularity via a TDD configuration applied to uplink (UL).

3. The terminal as claimed in claim 1,
wherein
with respect to the TDD configuration included in the broadcast information, the granularity is increased in a case where the number of combinations of time intervals that are configurable is greater than a predetermined threshold.

4. The terminal as claimed in claim 3,
wherein
the predetermined threshold is determined based on the number of bits that can be used in the TDD configuration included in the broadcast information.

5. The terminal as claimed in claim 1,
wherein
with respect to the TDD configuration included in the broadcast information, two types of time intervals can be configured, a first type of a time interval can be configured from 1 unit, and a second type of a time interval can be configured from 0 units.

6. A communication method executed by a terminal, comprising:
receiving broadcast information from another terminal;
identifying a resource that can be used for terminal-to-terminal direct communication, based on time intervals based on a specific granularity indicated via a time division duplex (TDD) configuration included in the broadcast information; and
performing terminal-to-terminal direct communication using the resource.
